# EUROPÄISCHE PATENTSCHRIFT

(11) **EP 1 122 461 B1**
(45) Veröffentlichungstag und Bekanntmachung des Hinweises auf die Patenterteilung: **06.10.2004**
(21) Anmeldenummer: 01100049.4
(22) Anmeldetag: 09.01.2001
(51) Int. Cl.: F16F 15/131

(54) **Torsionsschwingungsdämpfer**
Torsional vibration damper
Amortisseur de vibrations torsionelles

(30) Priorität: 31.01.2000 DE 10004125
(43) Veröffentlichungstag der Anmeldung: 08.08.2001
(73) Patentinhaber: ZF Sachs AG, 97424 Schweinfurt (DE)
(72) Erfinder: Schauder, Benedikt, Dr.-Ing., 97424 Schweinfurt (DE); Schierling, Bernhard, Dipl.-Ing.(FH), 97273 Kürnach (DE); Kleifges, Jürgen, Dipl.-Ing., 97422 Schweinfurt (DE)

(56) Entgegenhaltungen:
- EP-A- 0 926 390
- DE-A- 4 425 570
- DE-A- 19 816 518
- DE-A- 19 831 158
- DE-A- 19 834 729

## Beschreibung

Die vorliegende Erfindung betrifft einen Torsionsschwingungsdämpfer, insbesondere für einen Antriebsstrang eines Kraftfahrzeugs, umfassend ein eine Reibfläche zum Zusammenwirken mit Reibbelägen einer Reibungskupplung aufweisendes, im Wesentlichen scheibenförmiges Schwungmassenelement und eine mit dem Schwungmassenelement in Verbindung stehende Dämpferelementanordnung. Diese wirkt mit einem Übertragungsteil zusammen, das über einen Verbindungsbereich mit dem Schwungmassenelement zur gemeinsamen Drehung um eine Drehachse des Torsionsschwingungsdämpfers drehfest und axial verbunden ist.

Ein derartiger Torsionsschwingungsdämpfer geht aus der DE 198 31 158 A1 hervor. Das im Wesentlichen scheibenförmige Schwungmassenelement des Torsionsschwingungsdämpfers kann aus einem Blechwerkstoff hergestellt sein. Die Verbindung des Schwungmassenelementes mit dem Übertragungsteil erfolgt mittels Bolzen, welche Durchgangsöffnungen in Schwungmassenelement und Übertragungsteil durchdringen, wobei diese Bolzen nicht nur eine Mitnahme des Schwungmassenelementes gegenüber dem Übertragungselement bewirken, sondern aufgrund des Fehlens einer Zentrierung des Schwungmassenelements gegenüber dem Übertragungsteil auch für eine Positionierung des Schwungmassenelements in Radialrichtung. Von besonderem Nachteil dürfte hierbei das Spiel sein, mit welchem die Bolzen die Durchgangsöffnungen durchgreifen, da sich das Spiel zwischen dem Übertragungsteil und einem Bolzen mit dem Spiel zwischen dem Bolzen und dem Schwungmassenetement überlagert, so dass ungewollt große Relativbewegungen zwischen Schwungmassenelement und Übertragungsteil zugelassen werden, die nicht nur störende Unwuchten zur Folge haben, sondern darüber hinaus auch die Bolzen mit Scherkräften belasten und damit eine Schädigung des Torsionsschwingungsdämpfers in dessen Verbindungsbereich begünstigen.

Ein weiterer Torsionsschwingungsdämpfer ist aus der DE 44 25 570 A1 bekannt. Bei diesem Torsionsschwingungsdämpfer ist das Schwungmassenelement aus Gussmaterial hergestellt. Bei einer derartigen Materialwahl treten jedoch die folgenden Probleme auf: An der Reibfläche des Schwungmassenelements kommt es in bestimmten Betriebssituationen, wie beispielsweise einer Berganfahrt mit Anhänger kurzzeitig zu einem sehr großen Temperaturanstieg, wohingegen die entgegengesetzte Seite, d. h. die der Reibfläche abgewandte Seite des Schwungmassenelements, sich kaum erwärmt. Dadurch ergibt sich ein großer Wärmegradient in axialer Richtung innerhalb des Schwungmassenelements, welcher zu sehr hohen inneren Spannungen führt, die Spannungsrisse oder ein Bersten des Schwungmassenelements zur Folge haben können. Um dies zu vermeiden, ist es erforderlich, hochwertige Gussmaterialien zu verwenden, was die Herstellung des Schwungmassenelements verteuert. Ferner hat die Ausbildung des Schwungmassenelements als Gussbauteil den Nachteil, dass eine Nachbearbeitung des Gussbauteils, beispielsweise zum Anbringen von Befestigungsbohrungen, ggf. mit Gewinde, oder zum Ausbilden von Kühlrippen auf der der Reibfläche abgewandten Rückseite des Schwungmassenelements sehr aufwendig und daher kostenintensiv ist.

Es ist daher Aufgabe der Erfindung, einen Torsionsschwingungsdämpfer der eingangs bezeichneten Art bereitzustellen, bei welchem das Schwungmassenelement bei einfacher und kostengünstiger Herstellung im Betrieb eine höhere Temperatur- und Berstfestigkeit erreicht, und zudem das Entstehen von Unwuchten vermieden ist.

Diese Aufgabe wird durch den in Anspruch definierten Torsionsschwingungsdämpfer gelöst. Ein aus einem Blechwerkstoff, insbesondere aus einem umformbaren Blechwerkstoff, hergestelltes Schwungmassenelement weist aufgrund der hohen Bruchdehnung des Blechwerkstoffs eine deutlich höhere Temperatur- und Berstfestigkeit auf als ein aus einem Gussmaterial hergestelltes Schwungmassenelement. Ferner lässt sich ein Blechwerkstoff aufgrund seines Umformverhaltens unter geringerem technischen Aufwand in eine gewünschte Form bringen und wesentlich einfacher nachbearbeiten als dies bei einem Gussmaterial der Fall ist. Darüber hinaus kann, um hohe Festigkeiten, insbesondere Oberflächenfestigkeiten, zu erhalten, wie dies beispielsweise im Bereich der Reibfläche des Schwungmassenelements erforderlich sein kann, ein aus einem Blechwerkstoff hergestelltes Schwungmassenelement insgesamt oder nur bereichsweise gehärtet werden oder mit einer harten Beschichtung, beispielsweise TiN, versehen werden.

Als Blechwerkstoff kommen grundsätzlich sämtliche Blechwerkstoffe in Betracht, welche bei gutem Umformverhalten im Betrieb eine hinreichende Temperatur- und Berstfestigkeit aufweisen. Beispielsweise kann als Blechwerkstoff STW 24 oder ein Aluminium-Blechwerkstoff gewählt werden.

Der Torsionsschwingungsdämpfer weist femer ein Übertragungsteil aufweisen, welches mit der Dämpferelementanordnung zusammenwirkt und über einen Verbindungsbereich mit dem Schwungmassenelement zur gemeinsamen Drehung um eine Drehachse des Torsionsschwingungsdämpfers drehfest verbunden ist. Ein derartiger Aufbau ist zweckmäßig, da das Schwungmassenelement konstruktiv einfach ausgestaltet werden kann und das mechanisch und thermisch weniger belastete Übertragungsteil aus einem weniger hochwertigen Werkstoff hergestellt werden kann als das Schwungmassenelement.

Um bei einem derartigen Aufbau das Übertragungsteil und das Schwungmassenelement relativ zueinander in einer Sollposition festzulegen, ist vorgesehen, dass das Schwungmassenelement Positioniermittel aufweist und dass das Übertragungsteil Gegen-Positioniermittel aufweist, welche zur Positionierung des Schwungmassenelements relativ zum Übertragungsteil zusammenwirken. Durch diese Maßnahme lässt sich insbesondere eine konzentrische Drehbewegung von Schwungmassenelement und Übertragungsteil um die Drehachse realisieren.

Im Folgenden soll im Einzelnen auf die verschiedenen Verbindungsmöglichkeiten des aus einem Blechwerkstoff hergestellten Schwungmassenelements und des mit diesem gekoppelten Übertragungsteils eingegangen werden.

Zur formschlüssigen Verbindung von Schwungmassenelement und Übertragungsteil ist vorgesehen, dass in dem Verbindungsbereich an einem Teil von Schwungmassenelement und Übertragungsteil eine Mitnahmeanordnung integral ausgebildet ist, welche in eine korrespondierende Gegen-Mitnahmeanordnung an dem jeweils anderen Teil von Schwungmassenelement oder Übertragungsteil eingreift. Eine derartige Mitnahmeanordnung kann beispielsweise von einer einzigen Lasche gebildet sein, welche in eine korrespondierende Öffnung an dem jeweils anderen Teil eingreift. Für ein günstiges und zuverlässiges Kraftübertragungsverhalten kann insbesondere vorgesehen sein, dass an dem einen Teil von Schwungmassenelement und Übertragungsteil in Umfangsrichtung eine Verzahnung als Mitnahmeanordnung vorgesehen ist, welche mit einer korrespondierenden Gegen-Verzahnung als Gegen-Mitnahmeanordnung an dem jeweils anderen Teil in Eingriff steht.

Zur axialen Sicherung von Schwungmassenelement und Übertragungsteil zusätzlich zu einer Mitnahmeanordnung an dem einen Teil und einer Gegen-Mitnahmeanordnung an dem jeweils anderen Teil kann vorgesehen sein, dass das Schwungmassenelement und das Übertragungsteil zur axialen Sicherung im Verbindungsbereich miteinander verstemmt sind. Es wird also zunächst das Schwungmassenelement und das Übertragungsteil im Verbindungsbereich zusammengesetzt und anschließend wird das eine relativ zu dem anderen Teil durch Verstemmen, vorzugsweise im Mitnahmebereich bzw. im Gegen-Mitnahmebereich, axial gesichert.

Alternativ zu der axialen Sicherung mittels Verstemmen, also mittels eines weiteren Umformprozesses, kann vorgesehen sein, dass das Schwungmassenelement und das Übertragungsteil zur axialen Sicherung im Verbindungsbereich über einen Sicherungsring gegenseitig gesichert sind. Die axiale Sicherung mittels eines Sicherungsrings erleichtert Reparaturvorgänge, insbesondere ein Austauschen des Schwungmassenelements, und ist ferner besonders kostengünstig.

Das Schwungmassenelement und das Übertragungsteil können beispielsweise formschlüssig miteinander verbunden sein. Eine formschlüssige Verbindung zwischen Schwungmassenelement und Übertragungsteil ist in der Regel einfach herzustellen und gewährleistet eine sichere Kraftübertragung von dem einen auf das andere Teil.

Die formschlüssige Übertragung kann beispielsweise derart realisiert sein, dass in dem Verbindungsbereich wenigstens ein Bolzen oder Niet an einem Teil von Schwungmassenelement und Übertragungsteil integral ausgebildet ist, welcher jeweils in eine korrespondierende Aufnahmeöffnung in dem jeweils anderen Teil von Schwungmassenelement und Übertragungsteil eingreift. Der Bolzen oder Niet kann dabei an dem Schwungmassenelement durch einen Umformvorgang an diesem ausgebildet werden. Die Aufnahmeöffnung in dem jeweils anderen Teil kann ebenfalls bereits beim Umformvorgang dieses Teils hergestellt werden, beispielsweise durch Ausstanzen.

Als weitere Verbindungsmöglichkeit zwischen Schwungmassenelement und Übertragungsteil, welche auch zusätzlich zu der vorstehend beschriebenen formschlüssigen Verbindung gewählt werden kann, kann erfindungsgemäß vorgesehen sein, dass das Schwungmassenelement und das Übertragungsteil im Verbindungsbereich reibschlüssig miteinander verbunden sind. Dabei ist es möglich, das Schwungmassenelement und das Übertragungsteil auch ohne Mitnahmeanordnung und Gegen-Mitnahmeanordnung aneinander zu positionieren und in einem dafür vorgesehenen Bereich an einem der beiden Teile, vorzugsweise im Bereich der Positioniermittel, die beiden Teile miteinander zu verstemmen. Hierfür können beispielsweise vom Übertragungsteil in Achsrichtung verlaufende Positionierlaschen vorgesehen sein, auf welche dann das Schwungmassenelement aufgesetzt wird und welche dann zur Festlegung des Schwungmassenelements am Übertragungsteil an ihrem Schwungmassenelement nahen Ende verstemmt werden.

Alternativ oder zusätzlich zum Verstemmen von Schwungmassenelement und Übertragungsteil kann zur reibschlüssigen Verbindung von diesen beiden Teilen vorgesehen sein, dass an dem Schwungmassenelement eine in Umfangsrichtung verlaufende Positionierstufe ausgebildet ist und dass an dem Übertragungsteil eine korrespondierende, in Umfangsrichtung verlaufende Gegen-Positionierstufe ausgebildet ist und dass ein Teil von Schwungmassenelement und Übertragungsteil auf das jeweils andere Teil von Schwungmassenelement und Übertragungsteil im Bereich der Positionierstufe und Gegen-Positionierstufe aufgeschrumpft ist. Die Verbindung von Schwungmassenelement und Übertragungsteil durch Aufschrumpfen ist fertigungstechnisch besonders einfach, da keine zusätzlichen Schritte, wie beispielsweise ein Verstemmen oder ein Anbringen von Befestigungsmitteln, erforderlich sind. Es ist jedoch auch möglich, das eine Teil auf das jeweils andere aufzuschrumpfen und zusätzlich eine formschlüssige Verbindung vorzusehen.

Zur Befestigung einer Druckplattenbaugruppe, zur Erhöhung der Stabilität und der thermischen Festigkeit des Schwungmassenelements oder/und zur erleichterten Anbringung des Schwungmassenelements an dem Übertragungsteil können an dem erfindungsgemäß aus Blechwerkstoff hergestellten Schwungmassenelement verschiedene Vorkehrungen getroffen sein, die im Folgenden erläutert werden.

Beispielsweise ist es möglich, dass in dem radial äußeren Bereich das Schwungmassenelement eine im Wesentlichen orthogonal zur Scheibenebene des Schwungmassenelements verlaufende Umfangskröpfung vorgesehen ist. Eine derartige Umfangskröpfung lässt sich durch einen Umformprozess auf einfache Weise herstellen und kann, wie im Folgenden dargestellt, verschiedene Aufgaben erfüllen.

Es kann beispielsweise in der Umfangskröpfung wenigstens eine in Achsrichtung verlaufende Befestigungsöffnung, vorzugsweise mit einem Innengewinde, zur Befestigung einer Druckplattenbaugruppe der Reibungskupplung vorgesehen sein. Die Befestigungsöffnung kann durch Einbohren oder Aufdornen in der Umfangskröpfung angebracht werden.

Ferner kann vorgesehen sein, dass die Umfangskröpfung doppellagig ausgebildet ist, wobei der Blechwerkstoff im radial äußeren Bereich des Schwungmassenelements im Wesentlichen orthogonal zur Scheibenebene des Schwungmassenelements gekröpft ist und in einem Scheitelbereich der Umfangskröpfung in Richtung zur Scheibenebene zurück gekröpft ist und wobei im Scheitelbereich die wenigstens eine Befestigungsöffnung im Wesentlichen in Achsrichtung vorgesehen ist. Eine derartige doppellagige Umfangskröpfung sorgt im radial äußeren Bereich des Schwungmassenelements, insbesondere bei einem dünnwandigen Schwungmassenelement, für eine stabile Ausbildung der Befestigungsöffnung, so dass eine sichere Befestigung der Druckplattenbaugruppe an dem Schwungmassenelement gewährleistet ist. Gegebenenfalls kann zwischen den beiden Lagen ein lichter Spalt ausgebildet sein, wobei die beiden Lagen im Bereich der Spaltöffnung zusätzlich miteinander verschweißt werden können, um die Festigkeit weiter zu erhöhen.

Statt durch Verschraubung kann die Druckplattenbaugruppe an dem Schwungmassenelement auch materialschlüssig durch Verschweißung, insbesondere im Bereich der Umfangskröpfung, reibschlüssig, beispielsweise durch Aufschrumpfen von einem Teil von Schwungmassenelement und Gehäuse der Druckplattenbaugruppe auf das jeweils andere Teil oder durch Verklemmen ausgebildet werden. Im letztgenannten Fall kann die Umfangskröpfung zumindest doppellagig ausgebildet sein und zwischen zwei Lagen einen in Achsrichtung zugänglichen Klemmspalt ausbilden, in welchen dann zur Klemmfixierung beispielsweise das Gehäuseteil der Druckplattenbaugruppe eingeklemmt werden kann. Die Klemmwirkung wird dadurch erreicht, dass der lichte Spalt zwischen den beiden den Klemmspalt bildenden Lagen eine kleinere Spaltweite aufweist als die Materialstärke des zu befestigenden Bauteils der Druckplattenbaugruppe.

Zur Positionierung des an dem Schwungmassenelement anzubringenden Bauteils der Druckplattenbaugruppe kann vorgesehen sein, dass im radial äußeren Bereich der Schwungmassenelements wenigstens ein Positionierzapfen und/oder Befestigungsniet vorgesehen ist. Der Befestigungsniet bzw. Positionierzapfen kann durch einen Umformvorgang integral an dem Schwungmassenelement ausgebildet werden.

Zur weiteren Erhöhung der Stabilität des Schwungmassenelements kann vorgesehen sein, dass dieses in seinem radial äußeren Bereich stufig ausgebildet ist. Dabei kann sich die Stufe in Richtung zur Druckplattenbaugruppe hin erstrecken und in Achsrichtung Reibbeläge der Reibungskupplung überlappen. Die stufige Ausbildung führt ferner dazu, dass das Schwungmassenelement insbesondere bei starker Erwärmung im Bereich der Reibfläche eine größere Formstabilität aufweist, als dies ohne Stufung der Fall wäre, so dass bei nahezu jedem Betriebszustand - unabhängig von der thermischen Verformung - ein hinreichend guter Reibeingriff zwischen der Reibfläche des Schwungmassenelements und der dieser benachbarten Reibscheibe der Reibungskupplung gewährleistet ist.

Um insbesondere bei einem dünnwandigen, zwar leicht umformbaren, jedoch weniger festen Blechwerkstoff eine hinreichende Stabilität des Schwungmassenelements zu behalten, kann erfindungsgemäß weiter vorgesehen sein, dass das Schwungmassenelement zumindest im Bereich der Reibfläche wenigstens zwei zumindest abschnittsweise aneinander liegende Blechteile umfasst. Dabei können die Blechteile über eine Schraubenverbindung, eine Nietverbindung, eine Klebeverbindung oder dergleichen, miteinander verbunden sein. Zur thermischen Entkopplung und damit zur Erzielung eines Kühleffekts können ferner die Blechteile im Bereich der Reibfläche in Abstand voneinander angeordnet sein.

Alternativ zu einer Kröpfung des gesamten Schwungmassenelements in Umfangsrichtung kann auch vorgesehen sein, dass am Schwungmassenelement zur Anbringung der Druckplattenbaugruppe der Reibungskupplung oder/und zur Anbringung am Übertragungsteil Montagezungen ausgebildet sind. Diese Montagezungen können durch ein freies Umformen (Ausschneiden) einzelner Blechabschnitte ausgebildet werden. Legt man beispielsweise bei orthogonal zur Drehachse gerichteter Reibfläche des Schwungmassenelements die diese Reibfläche definierende Ebene als Scheibenebene fest, so können sich die Montagezungen aus dieser Scheibenebene heraus in Richtung zur Druckplattenbaugruppe hin oder in Richtung zum Übertragungsteil hin erstrecken.

Im Folgenden werden bevorzugte Ausführungsbeispiele der Erfindung anhand der beiliegenden Figuren erläutert. Es stellen dar:
- Fig. 1: einen erfindungsgemäßer Torsionsschwingungsdämpfer mit formschlüssiger Verbindung zwischen Schwungmassenelement und Übertragungsteil;
- Fig. 2: einen Torsionsschwingungsdämpfer ebenfalls mit formschlüssiger Verbindung zwischen Schwungmassenelement und Übertragungsteil;
- Fig. 3: eine weitere Ausführungsform eines erfindungsgemäßen Torsionsschwingungsdämpfers mit formschlüssiger Verbindung zwischen Schwungmassenelement und Übertragungsteil;
- Fig. 3a,3b: vergrößerte Darstellungen des in Fig. 3 mit III gekennzeichneten Bereichs;
- Fig. 4: eine Darstellung eines erfindungsgemäßen Torsionsschwingungsdämpfers mit reibschlüssiger Verbindung zwischen Schwungmassenelement und Übertragungsteil;
- Fig. 5: einen Torsionsschwingungsdämpfer eines weiteren Ausführungsbeispiels mit reibschlüssiger Verbindung zwischen Schwungmassenelement und Übertragungsteil;
- Fig. 6: einen Torsionsschwingungsdämpfer mit materialschlüssiger Verbindung zwischen Schwungmassenelement und Übertragungsteil;
- Fig. 7: einen Torsionsschwingungsdämpfer mit materialschlüssiger Verbindung zwischen Schwungmassenelement und Übertragungsteil;
- Fig. 7a: eine Teilansicht des Torsionsschwingungsdämpfers aus Fig. 7, betrachtet in Blickrichtung des Pfeils VII;
- Fig. 8,9: Torsionsschwingungsdämpfer mit einer Verbindung von Schwungmassenelement und Übertragungsteil durch ein separates Verbindungselement;
- Fig. 10a-10e: verschiedene Ausgestaltungen des radial äußeren Bereichs des Schwungmassenelements;
- Fig. 11a-11c: verschiedene Möglichkeiten zur Anbringung eines Gehäuses einer Druckplattenbaugruppe an dem radial äußeren Bereich des erfindungsgemäßen Schwungmassenelements;
- Fig. 12: einen Torsionsschwingungsdämpfer mit Auslenkungsmassen als Dämpferelementanordnung;
- Fig. 13: eine perspektivische Ansicht des in Fig. 12 gezeigten Torsionsschwingungsdämpfers;
- Fig. 14-17: Torsionsschwingungsdämpfer, mit Auslenkungsmassen, mit weiteren Ausgestaltungen des Schwungmassenelements.

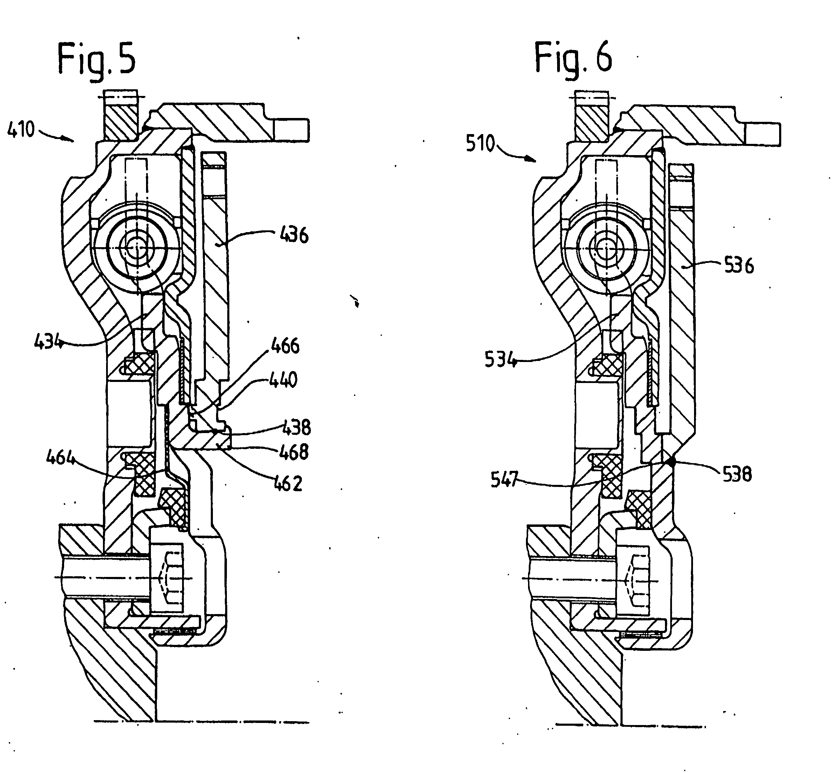

Die in den Figuren 6 bis 9 und 12 bis 17 dargestellten und im Folgenden beschriebenen Torsionsschwingungsdämpfer sind keine Ausführungsbeispiele der Erfindung und dienen dazu, das Verständnis der Erfindung zu erleichtern.

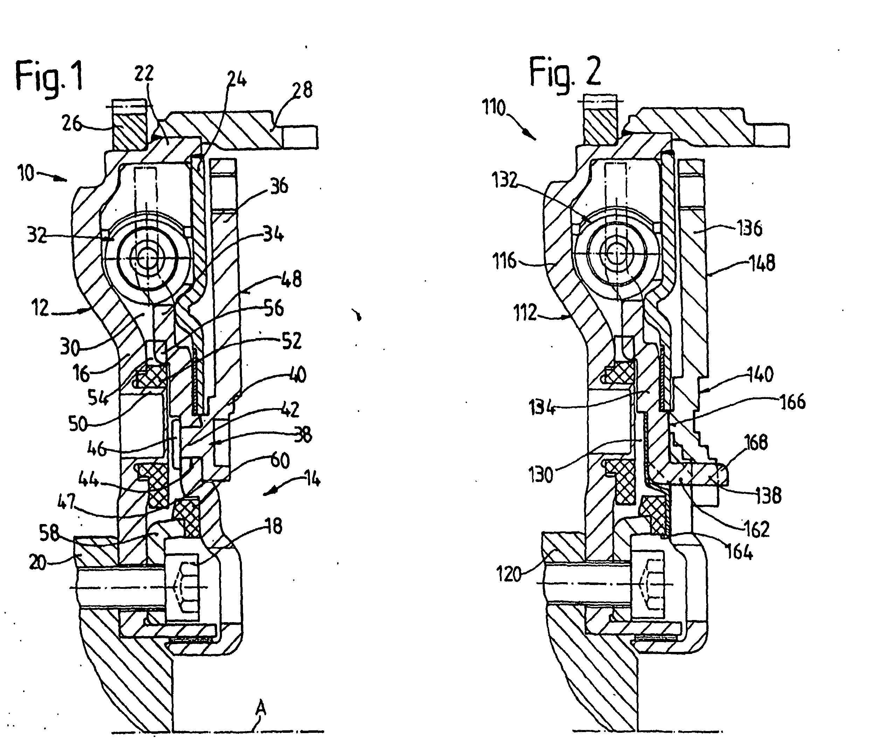

In Fig. 1 ist ein erfindungsgemäßer Torsionsschwingungsdämpfer allgemein mit 10 bezeichnet. Dieser umfasst eine Primärseite 12 und eine Sekundärseite 14, welche um eine Drehachse A relativ zueinander verdrehbar sind. Die Primärseite 12 umfasst ein im Wesentlichen scheibenförmiges erstes Übertragungsteil 16, das radial innen durch eine Mehrzahl von Befestigungsschrauben 18 an einer Antriebswelle 20 angebracht ist. Radial außen weist das erste Übertragungsteil 16 einen sich im Wesentlichen axial erstreckenden ringartigen Abschnitt 22 auf, mit welchem ein sich nach radial innen erstreckendes Scheibenelement 24 durch Verschweißen verbunden ist. An dem axialen Abschnitt 22 ist ferner ein Starterzahnkranz 26 sowie ein zusätzliches Massenelement 28 angebracht. Das erste Übertragungsteil 16 und das Scheibenelement 24 bilden zusammen einen nach radial außen hin dicht abgeschlossenen Hohlraum 30, in welchem eine mit wenigstens einer Federeinheit ausgeführte Dämpferelementanordnung 32 positioniert ist und welche mit einem viskosen Medium, wie beispielsweise Schmierfett, befüllt ist. Ferner greift von radial innen her in den Hohlraum 30 ein zweites Übertragungsteil 34, welches mit einem Schwungmassenelement 36 in einem Verbindungsbereich 38 fest verbunden ist.

Der Verbindungsbereich 38 umfasst insbesondere einen durch Ausprägen an dem radial inneren Bereich 40 des Schwungmassenelements 36 integral ausgebildeten Niet 42, der in eine korrespondierende Aufnahmeöffnung 44 im zweiten Übertragungsteil 34 eingreift und an seiner schwungmassenelement-fernen Seite 46 zur Sicherung des Schwungmassenelenets 36 deformiert ist. Das Schwungmassenelement 36 ist durch Eingreifen des Niets 38 in die korrespondierende Aufnahmeöffnung 44 und Deformieren des Niets 38 an seinem Ende 46 formschlüssig mit dem Übertragungsteil 34 verbunden. Eine Positionierung des Schwungmassenelements 36 relativ zu dem Übertragungsteil 34 erfolgt über den radial inneren Bereich des Schwungmassenelements 36 und eine mit diesem zusammenwirkende an dem Übertragungsteil 34 ausgebildete Positionierstufe 47.

Das Schwungmassenelement 36 ist aus einem Blechwerkstoff hergestellt, welcher zum einen für eine hinreichende Festigkeit des Schwungmassenelements 36 sorgt, zum anderen jedoch Umformprozesse, wie beispielsweise im radial inneren Bereich 40, erleichtert. Wie nachfolgend noch näher erläutert wird, umfasst das Schwungmassenelement 36 eine Reibfläche 48, welche mit Kupplungsscheiben einer Reibungskupplung (in Fig. 1 nicht gezeigt) in Eingriff steht und mit diesen in Eingriff bringbar ist.

Es sei angemerkt, dass obwohl in der Schnittdarstellung nach Fig. 1 nicht gezeigt, in Umfangsrichtung eine Mehrzahl von Niete 42, welche mit korrespondierenden Aufnahmeöffnungen 44 in Eingriff stehen, vorgesehen sein kann.

Wie aus Fig. 1 ferner ersichtlich, sind an dem ersten Übertragungsteil 16 Lagerbuchsen 50 eingeprägt, auf welchen Planetenräder 52 drehbar gelagert sind. Die Planetenräder 52 weisen eine Außenverzahnung 54 auf, welche mit einer Gegenverzahnung 56 an dem zweiten Übertragungsteil 34 in Eingriff stehen. Bei einer Relativdrehung zwischen Primärseite 12 und Sekundärseite 14 werden die Planetenräder 52 auf ihren zugehörigen Lagerbuchsen 50 gedreht, wobei sich die Außenverzahnung 54 in dem mit viskosem Medium gefüllten Hohlraum 30 unter Fluidreibung dreht.

Ferner ist an der Primärseite 12 ein Winkelring 58 über die Befestigungsschrauben 18 befestigt, welcher über ein Reibelement 60 mit dem zweiten Übertragungsteil 34 in Reibeingriff steht und durch die Reibwirkung ein Relativdrehung zwischen Primärseite 12 und Sekundärseite 14 hemmt.

Fig. 2 zeigt eine weitere Ausführungsform des erfindungsgemäßen Torsionsschwingungsdämpfers, wobei in Fig. 2 gleiche oder gleichwirkende Komponenten wie in Fig. 1 mit denselben Bezugszeichen, jedoch erhöht un die Zahl 100 bezeichnet sind. Der Torsionsschwingungsdämpfer 110 gemäß Fig. 2 entspricht im Wesentlichen dem Torsionsschwingungsdämpfer 10 nach Fig. 1, so dass im Folgenden nur deren Unterschiede erläutert werden. Diese Unterschiede liegen in der Ausgestaltung des Schwungmassen-elements 136, insbesondere in dessen radial inneren Bereich 140 und in der Ausgestaltung des Verbindungsbereichs 138. Aus dem zweiten Übertragungsteil 134 sind in axialer Richtung von dem ersten Übertragungsteil 116 weggerichtet Lagerzungen 162 in Umfangsrichtung mehrfach ausgeformt. Um einen Austritt von viskosem Medium aus dem Hohlraum 130 im Bereich der ausgeformten Lagerzungen zu vermeiden, ist ein Abdeckblech 164 erforderlich. Das Schwungmassenelement 136 ist im radial inneren Bereich 140 mehrfach stufig ausgebildet und steht über eine Anlagefläche 166 in gegenseitiger Anlage mit dem Übertragungsteil 134. Ferner weist das Schwungmassenelement 136 in seinem radial inneren Bereich Ausnehmungen auf, welche zu den Lagerzungen 162 korrespondieren, so dass das Schwungmassenelement 136 verzahnungsartig mit den Lagerzungen 162 an dem Übertragungsteil 134 in Eingriff bringbar ist. Zur axialen Sicherung des Schwungmassenelements 136 an dem Übertragungsteil 134 sind die Lagerzungen 162 in ihrem primärseitenfernen Ende 168 verstemmt, so dass das Schwungmassenelement 136 über den verstemmten Bereich 168 gegen das Übertragungsteil 134 gedrückt wird. Bei einem derartigen Aufbau kann ein Drehmoment von der Antriebswelle 120 über die Primärseite 112, über die Dämpferelementanordnung 132 auf das Übertragungsteil 134 erfolgen, wobei das Drehmoment durch die als Verzahnung zusammenwirkenden Lagerzungen 162 und die korrespondierenden Ausnehmungen im Schwungmassenelement 136 zuverlässig auf das Schwungmassenelement 136 übertragen wird. Das Drehmoment kann dann über die Reibfläche 148 und über die nicht gezeigte Reibungskupplung zum Abtrieb hin übertragen werden.

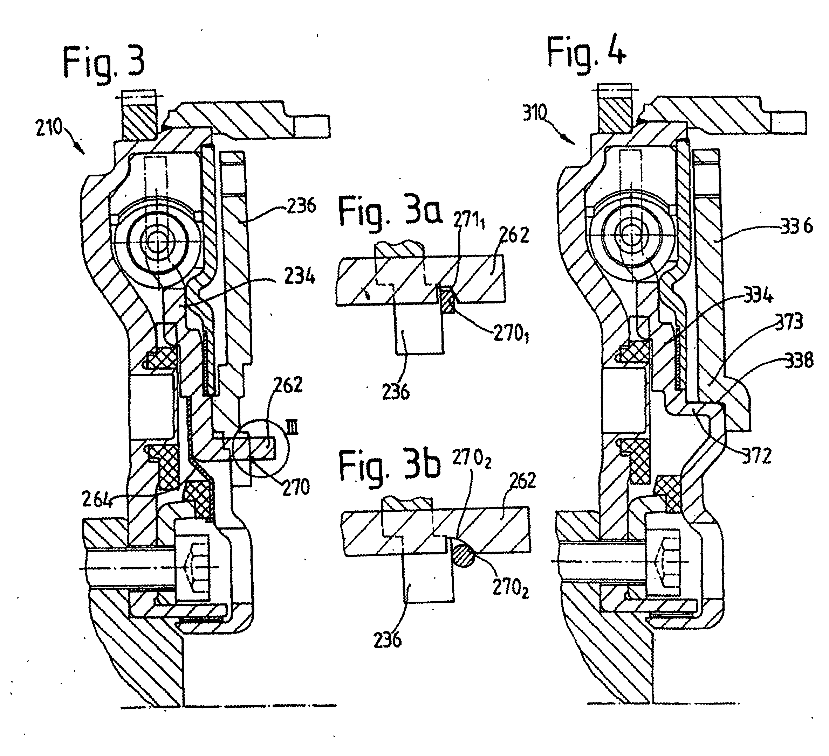

Fig. 3 zeigt einen weiteren erfindungsgemäßen Torsions-schwingungsdämpfer 210. Auch dieser Torsionsschwingungsdämpfer 210 entspricht in seinem Aufbau weitgehend dem in Fig. 1 detailliert beschriebenen Torsionsschwingungsdämpfer 10, so dass im Folgenden wiederum lediglich auf die Unterschiede eingegangen werden soll. Bei dem Torsionsschwingungsdämpfer 210 ist das Schwungmassenelement 236 ebenfalls über Lagerzungen 262 mit dem Übertragungsteil 234 gekoppelt. Die axiale Sicherung erfolgt jedoch nicht über Verstemmung, sondern über einen zusätzlichen Sicherungsring 270.

Wie in Fig. 3a und 3b gezeigt, welche den Bereich III aus Fig. 3 vergrößert darstellen, sind verschiedene Gestaltungsmöglichkeiten für die axiale Sicherung mittels eines Sicherungsrings möglich. Fig. 3a zeigt einen im Querschnitt im Wesentlichen rechteckigen Sicherungsring 270₁, welcher in eine zugeordnete Einkerbung 271₁ eingreift. Die in Fig. 3b gezeigte Ausgestaltung umfasst einen im Querschnitt im Wesentlichen kreisförmigen Sicherungsring 270₂, welcher in eine im Querschnitt viertelkreisförmige Einkerbung eingreift. Zur Kraftübertragung in Umfangsrichtung wirken wiederum die Lagerzungen 262 mit korrespondierenden Ausnehmungen am radial inneren Bereich des Schwungmassenelements 236 verzahnungsartig zusammen.

Fig. 4 zeigt ein weiteres Ausführungsbeispiel eines erfindungsgemäßen Torsionsschwingungsdämpfers 310, welcher in seinem Aufbau im Wesentlichen dem Torsionsschwingungsdämpfer 10 gemäß Fig. 1 entspricht. Deshalb werden wiederum gleiche Bezugszeichen für gleiche Komponenten verwendet, jedoch erhöht um die Zahl 300. Der Torsionsschwingungsdämpfer 310 gemäß Fig. 4 unterscheidet sich von dem Torsionsschwingungsdämpfer gemäß Fig. 1, 2 und 3 lediglich darin, dass das Schwungmassenelement 336 nicht formschlüssig mit dem Übertragungsteil 334 verbunden ist, sondern in dem Verbindungsbereich 338 reibschlüssig. Die reibschlüssige Verbindung ist dadurch hergestellt, dass das Übertragungsteil 334 im Verbindungsbereich 338 eine Positionierstufe 372 aufweist und dass das Schwungmassenelementeine korrespondierende Positionierstufe 373 aufweist. Die Verbidnung zwischen Schwungmassenelement 336 und Übertragungsteil 334 erfolgt nun dadurch, dass das Schwungmassenelement 336 mit seiner Positionierstufe 373 auf die Positionierstufe 372 des Übertragungsteils 334 aufgeschrumpft wird und nach Aufschrumpfen Schwungmassenelement 336 und Übertragungsteil 334 in gegenseitigem Reibeingriff miteinander stehen.

Fig. 5 ist ein weiteres Ausführungsbeispiel eines erfindungsgemäßen Torsionsschwingungsdämpfers 410, wobei wiederum gleiche Komponenten mit denselben Bezugszeichen wie in den vorhergehenden Figuren bezeichnet sind, jedoch erhöht um die Zahl 400. Der Torsionsschwingungsdämpfer 410 unterscheidet sich wiederum nur hinsichtlich des Verbindungsbereichs 438 von den Torsionsschwingungsdämpfern gemäß Fig. 1 bis 4. In dem Verbindungsbereich 438 ist das Schwungmassenelement 436 mit dem Übertragungsteil 434 über Lagerzungen 462 verbunden, welcher an ihren primärseitenfernen Enden 468 verstemmt sind, so dass der radial innere Bereich 440 über entsprechende Ausprägungen gegen das Übertragungsteil 434 gedrückt wird. Mit Unterschied zu der Ausführungsform gemäß Fig. 2 sind jedoch am radial inneren Bereich 440 des Schwungmassenelements 436 keine Ausnehmungen vorgesehen, d. h. das Schwungmassenelement 436 steht nicht verzahnungsartig mit den Lagerzungen 462 in Eingriff. Eine Drehmomentübertragung von Übertragungsteil 434 auf das Schwungmassenelement 436 erfolgt somit lediglich nur über Reibeingriff über die Anlagefläche 466.

Fig. 6 zeigt einen weiteren erfindungsgemäßen Torsionsschwingungsdämpfer 510, welcher sich wiederum nur in der Gestaltung des Verbindungsbereichs 538 von den Torsionsschwingungsdämpfern gemäß Fig. 1 bis 5 unterscheidet. Daher werden für gleichartige Komponeneten dieselben Bezugszeichen wie vorangehend verwendet, jedoch erhöht om die Zahl 500.

Bei dem in Fig. 6 gezeigten Torsionsschwingungsdämpfer ist das Schwungmassenelement 536 mit dem Übertragungsteil 534 im Verbindungsbereich 538 materialschlüssig durch Verschweißen, insbesondere durch Laserverschweißen, verbunden. Hierfür wird das Schwungmassenelement 536 zunächst auf die Positionierstufe 547 aufgesetzt und anschließend im Bereich der Positionierstufe, d. h. im Verbindungsbereich 538, verschweißt. Es sei angemerkt, dass die beiden Teile 534 und 536 auch durch Verlöten miteinander verbunden werden können.

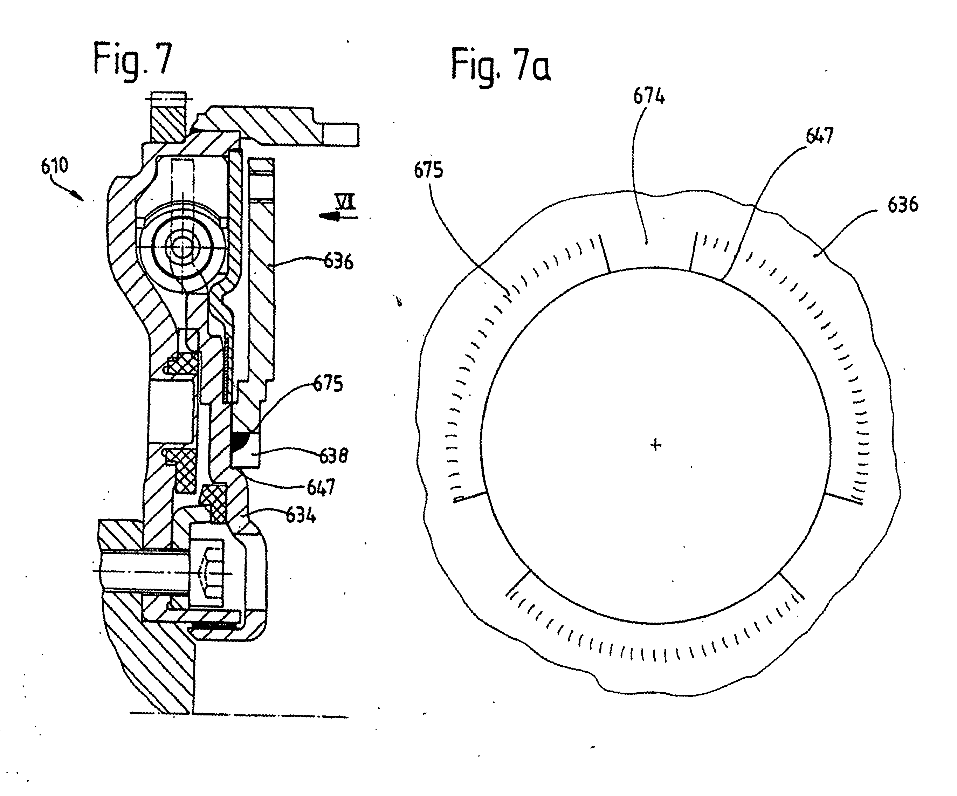

Fig. 7 zeigt einen weiteren Torsionsschwingungsdämpfer 610, bei welchem wiederum zur Beschreibung dieselben Bezugszeichen wie vorangehend, jedoch erhöht um die Zahl 600, verwendet werden. Der Torsionsschwingungsdämpfer 610 unterscheidet sich von dem vorangehend beschriebenen Torsionsschwingungsdämpfern erneutlediglich in der Ausgestaltung des Verbindungsbereichs 638. Fig. 7a wird zur Erläuterung der Gestaltung des Verbindungsbereichs 638 hinzugezogen. Das Schwungmassenelement 636 des Torsionsschwingungsdämpfers 610 umfasst in seinem radial inneren Bereich drei Positionierzungen 674, welche auf die Positionierstufe 647 zur Positionierung des Schwungmassenelements 636 gegenüber dem Übertragungsteil 634 aufgesetzt werden. Im Anschluss daran wird das Schwungmassenelement 636 an seinem radial inneren Rand 675 in Umfangsrichtung zwischen den Positionierzungen 674 mit dem Übertragungsteil 634 verschweißt.

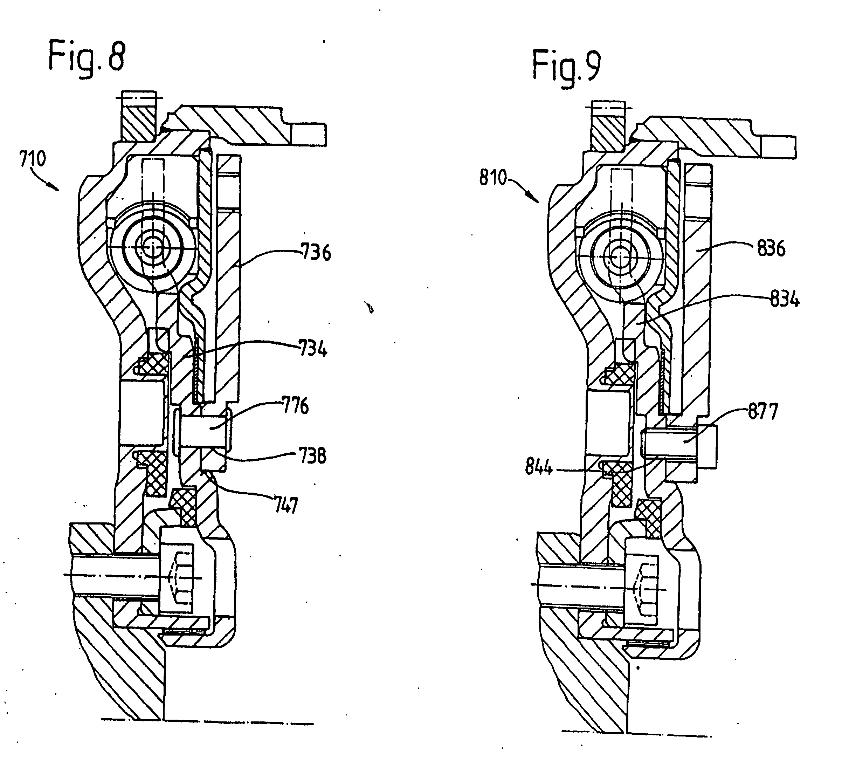

Fig. 8 zeigt einen weiteren Torsionsschwingungsdämpfer 710, bei welchem wiederum dieselben Bezugszeichen wie bei den vorangehend beschriebenen Torsionsschwingungsdämpfern gemäß Fig. 1 bis 7 verwendet werden, jedoch erhöht um die Zahl 700. Der Torsionsschwingungsdämpfer 710 unterscheidet sich erneut von den vorangehend beschriebenen Torsionsschwingungsdämpfern lediglich in der Ausgestaltung des Verbindungsbereichs 738. Bei dem Torsionsschwingungsdämpfer 710 sind das Schwungmassenelement 736 und das Übertragungsteil 734 über eine Mehrzahl von in Umfangsrichtung angeordneten Verbindungsniete 776 befestigt. Eine Positionierung des Schwungmassenelements 736 relativ zum Übertragungsteil 734 erfolgt über die Positionierstufe 747.

In Fig. 9 ist ein weiterer Torsionsschwingungsdämpfer 810 gezeigt. Der in Fig. 9 gezeigte Torsionsschwingungsdämpfer 810 unterscheidet sich von dem in Fig. 8 gezeigten Torsionsschwingungsdämpfer 710 lediglich darin, dass das Schwungmassenelement 836 über eine Verbindungsschraube 877 mit dem Übertragungsteil 834 verbunden ist, wobei das Außengewinde der Schraube 877 in eine zugehörige Innengewinde-Aufnahmeöffnung 844 am Übertragungsteil 834 eingreift.

Es sei nochmals darauf hingewiesen, dass sämtliche Schwungmassenelemente der in Fig. 1 bis 9 dargestellten Torsionsschwingungsdämpfer aus einem Blechwerkstoff hergestellt sind.

Fig. 10a bis 10i zeigen verschiedene Ausgestaltungsformen des radial äußeren Bereichs sowie des an diesen angrenzenden Bereichs der Reibfläche eines Schwungmassenelements 36, wie es in sämtlichen der in Fig. 1 bis 9 gezeigten Ausführungsbeispiele einsetzbar ist.

In Fig. 10a ist ein Schwungmassenelement 36a in Teilschnittdarstellung gezeigt, welches in seinem radial äußeren Bereich über den gesamten Umfang orthogonal zu der durch die Reibfläche 48a definierte Scheibenebene E in Form einer Umfangskröpfung 78a gekröpft ist. In die Umfangskröpfung 78a ist eine Aufnahmeöffnung 79a eingebracht mit einem Innengewinde, an welchem eine nicht gezeigte Druckplattenbaugruppe einer Reibungskupplung befestigt werden kann. Es sei angemerkt, dass in Umfangsrichtung eine Vielzahl derartiger Aufnahmeöffnungen 79a vorgesehen sein kann.

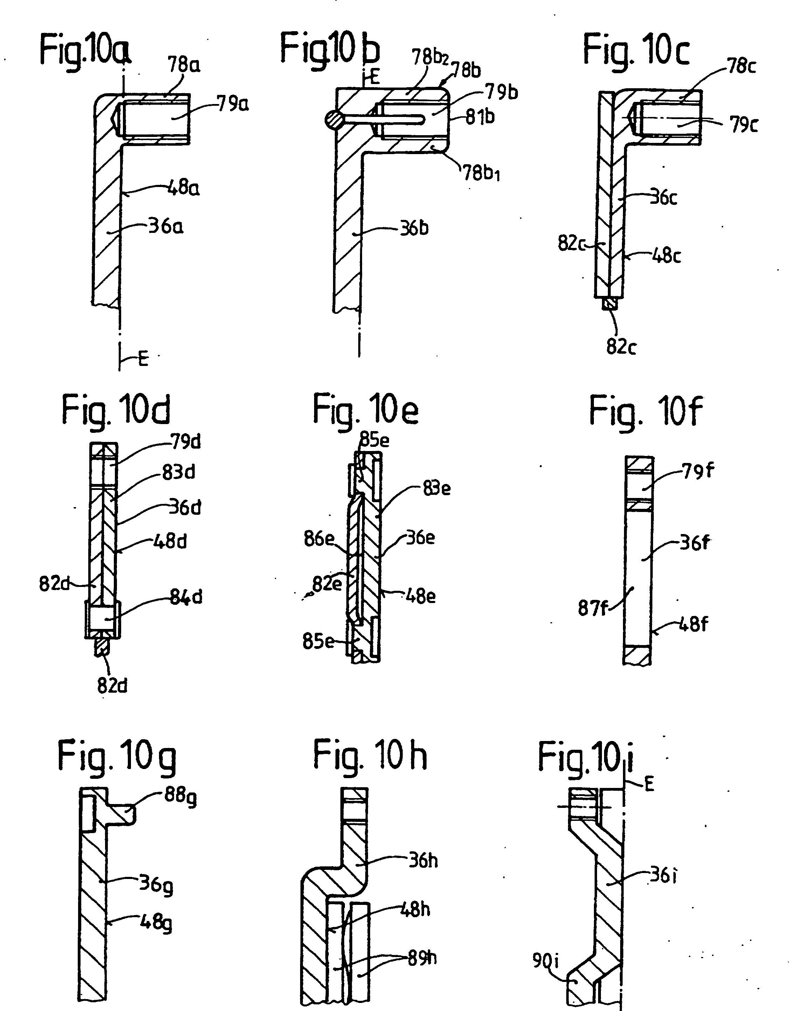

Fig. 10b zeigt ein Schwungmassenelement 36b mit einer Umfangskröpfung 78b, welche doppellagig ausgebildet ist, indem der Blechwerkstoff des Schwungmassenelements 36b zunächst orthogonal zur Scheibenebene E in einer Richtung entsprechend Abschnitt 78b₁ gekröpft ist und dann im wesentlichen um 180° in einem Scheitelbereich 79b mit einem Abschnitt 78b₂ zurückgekröpft ist. Die Umfangskröpfung 78b ist somit in dem in Fig. 10 gezeigten Querschnitt im Wesentlichen U-förmig und bildet einen Spalt 80b. Der Spalt 80b kann in Umfangsrichtung an seiner Öffnung durch eine Schweißnaht verschlossen werden, so dass die beiden Lagen 78b₁ und 78b₂ in Achsrichtung beidseitig materialschlüssig miteinander verbunden sind. Im Bereich des Scheitels 81b sind in Umfangsrichtung verteilt mehrere Aufnahmeöffnungen 79b mit Innengewinde zur Befestigung einer nicht gezeigten Druckplattenbaugruppe angebracht.

Das in Fig. 10c gezeigte Schwungmassenelement 36c ist in seinem radial äußeren Bereich im Bereich der Reibfläche 48c doppellagig aufgebaut. Die in Fig. 10c rechte Seite entspricht im Wesentlichen dem Aufbau des Schwungmassenelements gemäß Fig. 10a. Auf der der Reibfläche 48c abgewandten Seite ist ein weiteres Blechteil 82c als Versteifung angeordnet. Im radial inneren Bereich ist dann lediglich das weitere Blechteil 82c zur Befestigung an dem Übertragungsteil (nicht gezeigt) weiter geführt, wobei dieses durch Umformen in Richtung zu dem Blechteil 36c hin gestuft ist.

In Fig. 10d ist ein weiteres doppellagiges Schwungmassenelement 36d gezeigt, bestehend aus einem ersten Blechteil 83d und einem weiteren Blechteil 82d, welche im radial äußeren Bereich und im Bereich der Reibfläche 48a flächig aneinander liegen und welche in Umfangsrichtung über Niete 84d miteinander verbunden sind. Wiederum ist das weitere Blechteil 82d nach radial innen unter Stufenbildung fortgeführt. Ferner sei angemerkt, dass in Umfangsrichtung eine Mehrzahl von Aufnahmeöffnungen 79d in beide Blechteile nach deren Zusammenfügen eingebracht sind, welche Aufnahmeöffnungen 79d zur Anbringung einer Druckplattenbaugruppe (nicht gezeigt) mit einem Innengewinde versehen sind.

In Fig. 10e ist ein weiteres doppellagiges Schwungmassenelement 36e gezeigt, wobei das die Reibfläche 48e aufweisende Blechteil mit an diesem integral ausgebildeten Nieten 85 versehen ist, welche in korrespondierende Aufnahmeöffnungen in dem weiteren Blechteil 82e eingreifen und die Blechteile 83e und 82e fest miteinander verbinden. Im Bereich der Reibfläche 48e ist das weitere Blechteil 82e im Abstand von dem die Reibfläche aufweisenden Blechteil 83e angeordnet, so dass sich ein Luftspalt 86e ausbildet, welcher zur Kühlung des im Bereich der Reibfläche 48e thermisch stark belasteten Blechteils 83e dient.

In Fig. 10f ist ein Schwungmassenelement 36f gezeigt, welches in seinem radial äußeren Bereich Aufnahmeöffnungen 79f mit Innengewinde aufweist und welches von radial innen nach radial außen verlaufende schmale Schlitze (im Schnitt gezeigt) 87 aufweist. Diese sternförmig angeordneten Schlitze sorgen für eine Kühlwirkung im Bereich der Reibfläche 58f.

In Fig. 10g ist ein Schwungmassenelement 36g gezeigt, in dessen radial äußeren Bereich eine Mehrzahl von Positionierzapfen 88g von der reibflächenfernen Seite her ausgeprägt sind. Die Positionierzapfen 88g dienen zur Positionierung einer nicht gezeigten Druckplattenbaugruppe und können gegebenenfalls auch, wie in Fig. 10e in umgekehrter Richtung zur Verbindung der beiden Blechteile 82e und 83e gezeigt, zur Vernietung verwendet werden.

Fig. 10h zeigt ein Schwungmassenelement 36h, welches oberhalb der Reibfläche 48h zur Versteifung stufig ausgebildet ist. In Fig. 10h sind ferner Kupplungsscheiben 89h der vorangehend mehrmals angesprochenen Reibungskupplung gezeigt.

Fig. 10i zeigt schließlich ein Schwungmassenelement 36i, bei welchem Montagezungen 90i zur Befestigung der nicht gezeigten Druckplattenbaugruppe radial außen und zur Anbringung an dem Übertragungsteil radial innen aus der Scheibenebene E herausragen. Die Befestigungszungen 90i sind durch Einschneiden und Umformen in die in Fig. 10i gezeigte Form gebracht sind.

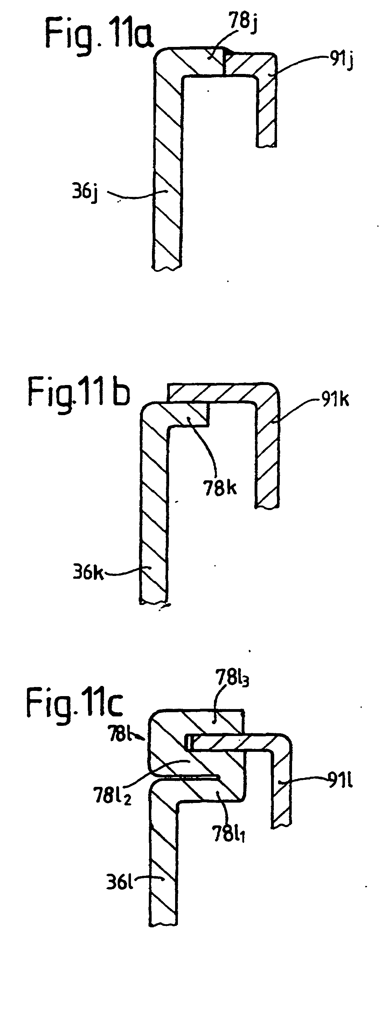

In Fig. 11a bis 11c sind Alternativen zu den in Fig. 10a - i gezeigten Befestigungsmöglichkeiten eines Gehäuses 91 einer nicht gezeigten Druckplattenbaugruppe an dem Schwungmassenelement 36 gezeigt. In Fig. 11a ist das Gehäuse 91j mit der Umfangskröpfung 78j verschweißt bzw. mit dieser verlötet; In Fig. 11b ist das Gehäuse 91k auf die Umfangskröpfung 78k aufgeschrumpft; In Fig. 11c ist die Umfangskröpfung 78I dreilagig ausgebildet mit einem ersten Abschnitt 78I₁, einem zweiten Abschnitt 78I₂ und einem dritten Abschnitt 78I₃, wobei die drei Abschnitte S-förmig verlaufen und wobei die beiden Abschnitte 78I₂ und 78I₃ zwischen sich einen Spalt bilden, in welchem das Gehäuse 91l eingeklemmt ist.

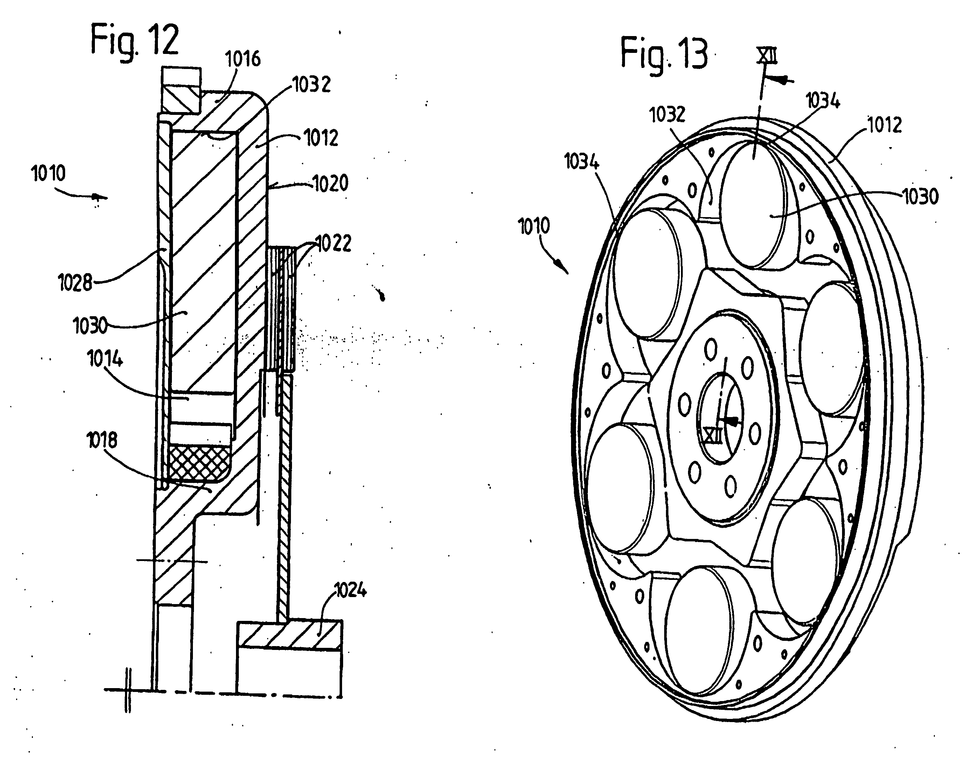

Fig. 12 bis 17 zeigen weitere Torsionsschwingungsdämpfer. Bei diesen Torsions-schwingungsdämpfern handelt es sich nicht wie bei dem Torsionsschwingungsdämpfer gemäß Fig. 1 bis 9 um einen Torsionsschwingungsdämpfer mit einer wenigstens eine Federeinheit umfassenden Dämpferelementanordnung, sondern um einen Torsionsschwingungsdämpfer mit Auslenkungsmassen. Im Folgenden werden zur Beschreibung der Ausführungsbeispiele nach Fig. 12 bis 17 - ohne Bezugnahme auf die vorstehend beschriebenen Ausführungsbeispiele und die dort verwendeten Bezugszeichen - neue Bezugszeichen verwendet, beginnend mit der Zahl 1010.

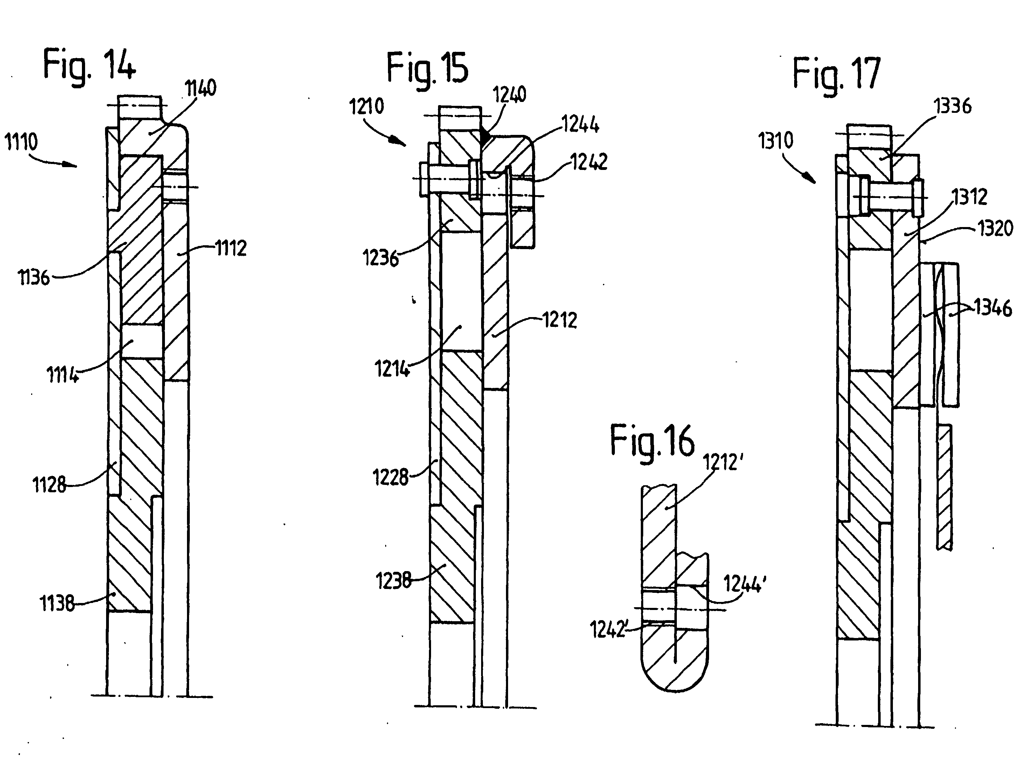

Der Torsionsschwingungsdämpfer 1010 gemäß Fig. 12 und 13 umfasst ein als Schwungmassenelement 1012 ausgebildetes Gehäuse. Das Schwungmassenelement 1012 ist als Blechteil ausgebildet und ist derart geformt, dass es Lagerkammern 1014 definiert. Hierfür weist das Schwungmassenelement 1012 einen in seinem radial äußeren Bereich im Wesentlichen in axialer Richtung verlaufenden Axialabschnitt 1016 und einen in seinem radial inneren Bereich im Wesentlichen axial verlaufenden Axialabschnitt 1018 auf, welcher durch einen eine Reibfläche 1020 definierenden Radialbereich mit dem Axialabschnitt 1016 verbunden ist. Die Reibfläche 1020 wirkt mit Kupplungsscheiben 1022 zusammen, die mit einer Abtriebswelle 1024 drehfest gekoppelt sind. Das Schwungmassenelement 1012 ist wie durch die strichpunktierte Linie 1026 angedeutet, über Befestigungselemente mit einem nicht gezeigten Antrieb verbunden.

Die Lagerkammern 1014 sind mit einem Abdeckblech 1028 verschlossen. In den Lagerkammern 1014 sind Auslenkungsmassen 1030 aufgenommen, welche sich in diesen Lagerkammern 1014 bewegen können. Unter Fliehkrafteinwirkung, d. h. bei Drehung des Torsionsschwingungsdämpfers 1010 um die Drehachse A, werden die Auslenkmassen 1030 gegen im radial äußeren Bereich der Lagerkammern 1014 ausgebildete Auslenkungsbahnen 1032 gedrückt. Die Auslenkungsbahnen 1032 sind im Wesentlichen kreisbogenförmig, weisen jedoch einen größeren Durchmesser auf als die im Wesentlichen kreiszylindrisch ausgebildeten Auslenkungsmassen 1030, so dass die Auslenkungsmassen 1030 mit ihrer Zylindermantelfläche auf den Auslenkungsbahnen 1032 ab

Wie vorstehend angedeutet, werden die Auslenkungsmassen 1030 unter Fliehkrafteinwirkung gegen die Auslenkungsbahnen 1032 gedrückt, wobei sie sich bei konstanter Drehzahl in einem Scheitelbereich 1034 einpendeln. Bei Drehzahländerung verlagern sich die Auslenkungsmassen 1030 aufgrund ihrer Trägheit entlang der Bahnen 1032 und damit nach radial innen entgegen der Fliehkraftwirkung, was zu einem torsionsschwingungsdämpfenden Effekt führt.

Fig. 14 zeigt eine Abwandlung des in Fig. 12 und 13 gezeigten Torsionsschwingungsdämpfers, wobei zur Beschreibung gleiche Bezugszeichen verwendet werden, wie in Fig. 12 und 13, jedoch erhöht um die Zahl 100.

Das Schwungmassenelement 1112 begrenzt die Lagerkammern 1114 in Fig. 14 lediglich nach rechts und nach radial außen. Jedoch werden die Auslenkungsbahnen nicht unmittelbar von dem Schwungmassenelement 1112 gebildet, sondern von Einsätzen 1136, welche über das Abdeckblech 1128 festgelegt sind. Nach radial innen werden die Lagerkammern 1114 durch einen weiteren Einsatz 1138 begrenzt, welcher mit einer nicht gezeigten Antriebswelle gekoppelt ist. Es sei angemerkt, dass in dem radial äußeren Bereich an dem Schwungmassenelement 1112 der Starterzahnkranz 1140 ausgebildet ist.

In Fig. 15 ist ein Torsionsschwingungsdämpfer 1210 gezeigt, welcher unter Verwendung der Bezugszeichen aus den Fig. 12 bis 14, jedoch erhöht um die Zahl 200, beschrieben wird. Das Schwungmassenelement 1212 ist scheibenförmig ausgebildet und zur Erhöhung der Massenträgheit im radial äußeren Bereich U-förmig gekröpft. Die Einsätze 1236 und 1238, welche die Auslenkungsbahn bilden bzw. die Lagerkammer 1214 nach innen begrenzen, sind über das Blechteil 1228 miteinander verbunden und im radial äußeren Bereich bei 1240 mit dem Schwungmassenelement 1212 verschweißt. Im radial äußeren Bereich ist eine Aufnahmeöffnung mit Innengewinde 1242 vorgesehen, welche mit einer durchmessergrößeren Öffnung 1244 fluchtet. Die Aufnahmeöffnung 1242 dient zur Aufnahme einer Schraube zur Befestigung einer nicht gezeigten Druckplattenbaugruppe. In Fig. 16 ist eine alternative Ausgestaltung der U-förmigen Kröpfung im radial äußeren Bereich gezeigt, bei welcher zunächst die durchmessergrößere Aufnahmebohrung 1244' von einer Befestigungsschraube der Druckplattenbaugruppe durchsetzt wird, welche dann erst mit dem Gewinde der Befestigungsbohrung 1242' in Eingriff gelagt.

Fig. 17 zeigt einen konstruktiv vereinfachten Torsionsschwingungsdämpfer 1310 ähnlich dem aus Fig. 15, bei welcher das Schwungmassenelement 1312 scheibenförmig ausgebildet ist, und mit den Einsätzen 1336 vernietet ist. Ferner sind in Fig. 17 noch Kupplungsscheiben 1346 gezeigt, welche im Bereich der Reibfläche 1320 mit dem Schwungmassenelement 1312 in Eingriff stehen.

Das in Fig. 12 bis 17 gezeigte und unter Bezugnahme auf diese beschriebene Schwungmassenelement ist ebenfalls aus einem Blechwerkstoff hergestellt, welcher sich unter geringem fertigungstechnischem Aufwand umformen lässt, und welcher ggf. härtbar ist.

## Patentansprüche

1. Torsionsschwingungsdämpfer, insbesondere für einen Antriebsstrang eines Kraftfahrzeugs, umfassend:
- ein eine Reibfläche zum Zusammenwirken mit Reibbelägen einer Reibungskupplung aufweisendes, im Wesentlichen scheibenförmiges Schwungmassenelement (36; 136; 236), das aus einem Blechwerkstoff hergestellt ist,
- eine mit dem Schwungmassenelement (36; 136; 236; 336; 436) in Verbindung stehende Dämpferelementanordnung (32; 132; 232; 332; 432),
- ein Übertragungsteil (34; 134; 234; 334; 434), welches mit der Dämpferelementanordnung (32; 132; 232; 332; 432) zusammenwirkt und über einen Verbindungsbereich (38; 138; 238; 338; 438) mit dem Schwungmassenelement (36; 136; 236) zur gemeinsamen Drehung um eine Drehachse (A) des Torsionsschwingungsdämpfers (10; 110; 210; 310; 410) drehfest und axial verbunden ist,
**dadurch gekennzeichnet, dass**
- das Schwungmassenelement (36; 136; 236; 336; 436) über einen durch Umformprozesse ausgebildeten, radial inneren Bereich (40; 140; 440) verfügt, durch welchen es relativ zu dem Übertragungsteil (34; 134; 234; 334; 434) positionierbar und drehsicherbar ist,
- im radial inneren Bereich (40; 140; 240) des Schwungmassenelementes (36; 136; 236; 336; 436) ein Positioniermittel (373) an dem Schwungmassenelement (36; 136; 236; 336; 436) ausgebildet ist,
- an dem Übertragungsteil (34; 134; 234; 334; 434) ein dem Positioniermittel (373) des Schwungmassenelementes (36; 136; 236; 336; 436) zugeordnetes Gegen-Positioniermittel (47; 162; 262; 372; 462) vorgesehen ist, und
- eines der beiden Bauteile - Schwungmassenelement (36; 136; 236; 336; 436) oder Übertragungsteil (34; 134; 234; 334; 434)
- über eine integral ausgebildete Mitnahmeanordnung (42; 162; 262; 466) und das jeweils andere Bauteil über eine Gegen-Mitnahmeanordnung (44) verfügt.

2. Torsionsschwingungsdämpfer nach Anspruch 1,
**dadurch gekennzeichnet,**
**dass** das Schwungmassenelement (36; 136; 236; 436) im radial inneren Bereich (40; 140; 440) mehrfach stufig ausgebildet ist und über eine Anlagefläche (166; 466) in gegenseitiger Anlage mit dem Übertragungsteil (134; 234; 434) steht.

3. Torsionsschwingungsdämpfer nach Anspruch 2,
**dadurch gekennzeichnet,**
**dass** in dem Verbindungsbereich (138; 238) an einem Teil von Schwungmassenelement (136; 236) und Übertragungsteil (134; 234) als Mitnahmeanordnung (162; 262) eine Verzahnung integral ausgebildet ist, welche in eine korrespondierende Gegen-Mitnahmeanordnung in Form einer Gegenverzahnung an dem jeweils anderen Teil von Schwungmassenelement (136; 236) oder Übertragungsteil (134; 234) eingreift.

4. Torsionsschwingungsdämpfer nach einem der Ansprüche 1 bis 3,
**dadurch gekennzeichnet,**
**dass** das Schwungmassenelement (236) und das Übertragungsteil (234) zur axialen Sicherung im Verbindungsbereich (238) über einen Sicherungsring (270, 270₁, 270₂) gegenseitig gesichert sind.

5. Torsionsschwingungsdämpfer nach einem der Ansprüche 1 oder 2,
**dadurch gekennzeichnet,**
**dass** in dem Verbindungsbereich (38) als Mitnahmeanordnung wenigstens ein Niet (42) an einem Teil von Schwungmassenelement (36) und Übertragungsteil (34) integral ausgebildet ist, welcher jeweils in eine als Gegen-Mitnahmeanordnung dienende, korrespondierende Aufnahmeöffnung (44) in dem jeweils anderen Teil von Schwungmassenelement (36) und Übertragungsteil (34) eingreift.

6. Torsionsschwingungsdämpfer nach Anspruch 1,
**dadurch gekennzeichnet,**
**dass** das Schwungmassenelement (336; 436) sowie das Übertragungsteil (334; 434) über eine Anlagefläche (466) reibschlüssig miteinander verbunden sind.

7. Torsionsschwingungsdämpfer nach Anspruch 6,
**dadurch gekennzeichnet,**
**dass** das Positioniermittel (373) an dem Schwungmassenelement (336) als eine in Umfangsrichtung verlaufende Positionierstufe und das Gegen-Positioniermittel (372) an dem Übertragungsteil (334) als eine korrespondierende, in Umfangsrichtung verlaufende Gegen-Positionierstufe ausgebildet ist, und dass ein Teil von Schwungmassenelement (336) und Übertragungsteil (334) auf das jeweils andere Teil von Schwungmassenelement (336) und Übertragungsteil (334) im Bereich des Positioniermittels (373) und Gegen-Positioniermittels (372) aufgeschrumpft ist.

8. Torsionsschwingungsdämpfer nach Anspruch 6,
**dadurch gekennzeichnet,**
**dass** das Positioniermittel an dem Schwungmassenelement (436) durch den Verbindungsbereich (438) und das Gegen-Positioniermittel an dem Übertragungsteil (434) durch Lagerzungen (462) gebildet ist, und dass das Schwungmassenelement (436) im radial inneren Bereich (440) über Ausprägungen verfügt, über weiche das Schwungmassenelement (436) über die Anlagefläche (466) in Reibeingriff mit dem Übertragungsteil (434) steht.

9. Torsionsschwingungsdämpfer nach einem der vorangehenden Ansprüche,
**dadurch gekennzeichnet,**
**dass** das Schwungmassenelement (136; 436) und das Übertragungsteil (134; 434) miteinander verstemmt sind.

10. Torsionsschwingungsdämpfer nach Anspruch 1,
**dadurch gekennzeichnet,**
**dass** der Blechwerkstoff STW 24 oder ein Aluminium-Blechwerkstoff ist.

11. Torsionsschwingungsdämpfer nach einem der vorangehenden Ansprüche mit einer in dem radial äußeren Bereich des Schwungmassenelementes (36) im Wesentlichen orthogonal zur Scheibenebene (E) des Schwungmassenelements (36) verlaufenden Umfangskröpfung,
**dadurch gekennzeichnet,**
**dass** die Umfangskröpfung (78b) doppellagig ausgebildet ist, wobei der Blechwerkstoff im radial äußeren Bereich des Schwungmassenelements (36b) im Wesentlichen orthogonal zur Scheibenebene (E) des Schwungmassenelements (36b) gekröpft ist und in einem Scheitelbereich (81b) der Umfangskröpfung (78b) in Richtung zur Scheibenebene (E) zurück gekröpft ist und wobei im Scheitelbereich (81b) die wenigstens eine Befestigungsöffnung (79b) im Wesentlichen in Achsrichtung vorgesehen ist.

12. Torsionsschwingungsdämpfer nach Anspruch 1
**dadurch gekennzeichnet,**
**dass** die Umfangskröpfung (78l) zumindest doppellagig ausgebildet ist und zwischen zwei Lagen (78I₂, 78I₃) einen in Achsrichtung zugänglichen Klemmspalt zur Klemmfixierung einer Druckplattenbaugruppe (91l) bildet.

13. Torsionsschwingungsdämpfer nach einem der vorhergehenden Ansprüche,
**dadurch gekennzeichnet,**
**dass** im radial äußeren Bereich des Schwungmassenelements (36g) wenigstens ein Positionierzapfen (88g) und/oder Befestigungsniet zur Befestigung der Druckplattenbaugruppe der Reibungskupplung vorgesehen ist.

14. Torsionsschwingungsdämpfer nach einem der vorhergehenden Ansprüche,
**dadurch gekennzeichnet,**
**dass** das Schwungmassenelement (36h) in seinem radial äußeren Bereich stufig ausgebildet ist.

15. Torsionsschwingungsdämpfer nach einem der vorhergehenden Ansprüche,
**dadurch gekennzeichnet,**
**dass** das Schwungmassenelement (36c; 36d; 36e) zumindest im Bereich der Reibfläche (48c; 48d; 48e) wenigstens zwei zumindest abschnittsweise aneinanderliegende Blechteile (82c, 36c; 82d, 83d; 82e, 83e) umfasst.

16. Torsionsschwingungsdämpfer nach Anspruch 15,
**dadurch gekennzeichnet,**
**dass** die Blechteile (82c, 36c; 82d, 83d; 82e, 83e) über eine Schraubenverbindung, eine Nietverbindung (85e) oder eine Klebeverbindung miteinander verbunden sind.

17. Torsionsschwingungsdämpfer nach Anspruch 15 oder 16,
**dadurch gekennzeichnet,**
**dass** die Blechteile ( 82e, 83e) im Bereich der Reibfläche (48e) in Abstand voneinander angeordnet sind.

18. Torsionsschwingungsdämpfer nach einem der Ansprüche 1 bis 17,
**dadurch gekennzeichnet,**
**dass** am Schwungmassenelement (36i) zur Anbringung der Druckplattenbaugruppe der Reibungskupplung oder/und zur Anbringung am Übertragungsteil Montagezungen (90i) ausgebildet sind.

19. Torsionsschwingungsdämpfer nach Anspruch 18,
**dadurch gekennzeichnet,**
**dass** die Montagezungen (90i) sich aus der Scheibenebene (E) des Schwungmassenelements (36) heraus erstrecken.

## Claims

1. Torsional vibration damper, in particular for a drive train of a motor vehicle, comprising:
- an essentially disc-shaped flywheel mass element (36; 136; 236) which has a friction surface for interaction with friction linings of a friction clutch and which is produced from a sheet-metal material,
- a damper element arrangement (32; 132; 232; 332; 432) connected to the flywheel mass element (36; 136; 236; 336; 436),
- a'transmission part (34; 134; 234; 334; 434) which interacts with the damper element arrangement (32; 132; 232; 332; 432) and is connected fixedly in terms of rotation and axially to the flywheel mass element (36; 136; 236) via a connection region (38; 138; 238; 338; 438) for joint rotation about an axis of rotation (A) of the torsional vibration damper (10; 110; 210; 310; 410),
**characterized in that**
- the flywheel mass element (36; 136; 236; 336; 436) has a radially inner region (40; 140; 440) which is produced by forming processes and by means of which the said flywheel mass element can be positioned and rotationally secured with respect to the transmission part (34; 134; 234; 334; 434),
- in the radially inner region (40; 140; 240) of the flywheel mass element (36; 136; 236; 336; 436), a positioning means (373) is formed on the flywheel mass element (36; 136; 236; 336; 436),
- the transmission part (34; 134; 234; 334; 434) has provided on it a counterpositioning means (47; 162; 262; 372; 462) assigned to the positioning means (373) of the flywheel mass element (36; 136; 236; 336; 436), and
- one of the two components, the flywheel mass element (36; 136; 236; 336; 436) or transmission part (34; 134; 234; 334; 434) has an integrally formed driving arrangement (42; 162; 262; 466), and in each case the other component has a counterdriving arrangement (44).

2. Torsional vibration damper according to Claim 1, **characterized in that** the flywheel mass element (36; 136; 236; 436) has a multiply stepped design in the radially inner region (40; 140; 440) and is in mutual bearing contact via a bearing surface (166; 466) with the transmission part (134; 234; 434).

3. Torsional vibration damper according to Claim 2, **characterized in that**, in the connection region (138; 238), a toothing is formed integrally, as driving arrangement (162; 262), on a part of the flywheel mass element (136; 236) and of the transmission part (134; 234), the said toothing engaging into a corresponding counterdriving arrangement in the form of a countertoothing on the other part of the flywheel mass element (136; 236) or of the transmission part (134; 234) in each case.

4. Torsional vibration damper according to one of Claims 1 to 3, **characterized in that**, for axial securing in the connection region (238), the flywheel mass element (236) and the transmission part (234) are secured mutually via a securing ring (270, 270₁, 270₂).

5. Torsional vibration damper according to either one of Claims 1 and 2, **characterized in that**, in the connection region (38), at least one rivet (42) is formed integrally, as a driving arrangement, on a part of the flywheel mass element (36) and of the transmission part (34), the said rivet in each case engaging into a corresponding reception orifice (44), serving as a counterdriving arrangement, in the other part of the flywheel mass element (36) and of the transmission part (34) in each case.

6. Torsional vibration damper according to Claim 1, **characterized in that** the flywheel mass element (336; 436) and the transmission part (334; 434) are connected to one another frictionally via a bearing surface (466).

7. Torsional vibration damper according to Claim 6, **characterized in that** the positioning means (373) on the flywheel mass element (336) is designed as a positioning step running in the circumferential direction and the counterpositioning means (372) on the transmission part (334) is designed as a corresponding counterpositioning step running in the circumferential direction, and **in that** a part of the flywheel mass element (336) and of the transmission part (334) is shrunk in each case on to the other part of the flywheel mass element (336) and of the transmission part (334) in the region of the positioning means (373) and counterpositioning means (372).

8. Torsional vibration damper according to Claim 6, **characterized in that** the positioning means on the flywheel mass element (436) is formed by the connection region (438) and the counterpositioning means on the transmission part (434) is formed by bearing tongues (462), and **in that** the flywheel mass element (436) has, in the radially inner region (440), protuberances, via which the flywheel mass element (436) is in frictional engagement with the transmission part (434) via the bearing surface (466).

9. Torsional vibration damper according to one of the preceding claims, **characterized in that** the flywheel mass element (136; 436) and the transmission part (134; 434) are caulked with one another.

10. Torsional vibration damper according to Claim 1, **characterized in that** the sheet-metal material is STW 24 or an aluminium sheet-metal material.

11. Torsional vibration damper according to one of the preceding claims, with a circumferential bend running essentially orthogonally to the disc plane (E) of the flywheel mass element (36) in the radially outer region of the flywheel mass element (36), **characterized in that** the circumferential bend (78b) has a double-layered design, the sheet-metal material being bent essentially orthogonally to the disc plane (E) of the flywheel mass element (36b) in the radially outer region of the flywheel mass element (36b) and being bent back in the direction of the disc plane (E) in a vertex region (81b) of the circumferential bend (78b), and the at least one fastening orifice (79b) being provided essentially in the axial direction in the vertex region (81b).

12. Torsional vibration damper according to Claim 11, **characterized in that** the circumferential bend (78l) is of at least double-layered design and, between two layers (78l₂, 78l₃), forms an axially accessible clamping gap for the clamp-fixing of a pressure plate subassembly (91l).

13. Torsional vibration damper according to the preceding claims, **characterized in that** at least one positioning tenon (88g) and/or fastening rivet for fastening the pressure plate subassembly with a friction clutch is provided in the radially outer region of the flywheel mass element (36g).

14. Torsional vibration damper according to one of the preceding claims, **characterized in that** the flywheel mass element (36h) has a stepped design in its radially outer region.

15. Torsional vibration damper according to one of the preceding claims, **characterized in that** the flywheel mass element (36c; 36d; 36e) comprises, at least in the region of the friction surface (48c; 48d; 48e), at least two sheet-metal parts (82c, 36c; 82d, 83d; 82e, 83e) bearing at least partially against one another.

16. Torsional vibration damper according to Claim 15, **characterized in that** the sheet-metal parts (82c, 36c; 82d, 83d; 82e, 83e) are connected to one another via a screw connection, a rivet connection (85e) or an adhesive connection.

17. Torsional vibration damper according to Claim 15 or 16, **characterized in that** the sheet-metal parts (82e, 83e) are arranged at a distance from one another in the region of the friction surface (48e).

18. Torsional vibration damper according to one of Claims 1 to 17, **characterized in that** mounting tongues (90i) are formed on the flywheel mass element (36i) for the attachment of the pressure plate subassembly of the friction clutch and/or for attachment on the transmission part.

19. Torsional vibration damper according to Claim 18, **characterized in that** the mounting tongues (90i) extend out of the disc plane (E) of the flywheel mass element (36).

## Revendications

1. Amortisseur de vibrations torsionelles, en particulier pour une courroie de transmission d'un véhicule automobile, comprenant :
- un élément de masse centrifuge (36 ; 136, 236) essentiellement en forme de disque présentant une surface de friction pour la coopération avec des garnitures de friction d'un embrayage à friction lequel est fabriqué en un matériau à base de tôle,
- un agencement d'éléments d'amortissement (32 ; 132 ; 232 ; 332 ; 432) en relation avec l'élément de masse centrifuge (36 ; 136 ; 236 ; 336 ; 436),
- un élément de transmission (34 ; 134 ; 234 ; 334 ; 434) qui coopère avec l'agencement d'éléments d'amortissement (32 ; 132 ; 232 ; 332 ; 432) et qui est en liaison en solidarité de rotation et axialement avec l'élément de masse centrifuge (36 ; 136 ; 236) via une zone de liaison (38 ; 138 ; 238 ; 338 ; 438) pour la rotation commune autour d'un axe de rotation (A) de l'amortisseur de vibrations torsionelles (10 ; 110 ; 210 ; 310 ; 410),
**caractérisé en ce que**
- l'élément de masse centrifuge (36 ; 136 ; 236 ; 336 ; 436) dispose d'une zone radialement interne (40 ; 140 ; 440) formée grâce à un processus de déformation, grâce à laquelle il peut être positionné et protégé contre la rotation par rapport à l'élément de transmission (34 ; 134 ; 234 ; 334 ; 434),
- un moyen de positionnement (373) est formé sur l'élément de masse centrifuge (36 ; 136 ; 236 ; 336 ; 436) dans la zone radialement interne (40 ; 140 ; 240) de l'élément de masse centrifuge (36 ; 136 ; 236 ; 336 ; 436),
- sur l'élément de transmission (34 ; 134 ; 234 ; 334 ; 434) est prévu un moyen de positionnement conjugué (47 ; 162 ; 262 ; 372 ; 462) associé au moyen de positionnement de l'élément de masse centrifuge (36 ; 136 ; 236 ; 336 ; 436), et
- l'un des deux éléments constitutifs-élément de masse centrifuge (36 ; 136 ; 236 ; 336 ; 436) ou élément de transmission (34 ; 134 ; 234 ; 334 ; 434) dispose d'un dispositif d'entraînement (42 ; 162 ; 262 ; 466) intégralement formé, et que respectivement l'autre élément constitutif dispose d'un dispositif d'entraînement conjugué (44).

2. Amortisseur de vibrations torsionelles selon la revendication 1, **caractérisé en ce que** l'élément de masse centrifuge (36 ; 136 ; 236 ; 436) est réalisé à gradins multiples dans la zone radialement interne (40 ; 140 ; 440), et qu'il se trouve en contact réciproque avec l'élément de transmission (134 ; 234 ; 434) via une surface de contact (166 ; 466).

3. Amortisseur de vibrations torsionelles selon la revendication 2, **caractérisé en ce qu'**une denture est intégralement formée en guise de dispositif d'entraînement (162 ; 262) dans la zone de liaison (138 ; 238) sur une partie de l'élément de masse centrifuge (136 ; 236) et de l'élément de transmission (134 ; 234), laquelle denture est en prise dans un dispositif d'entraînement conjugué correspondant sous forme d'une denture conjuguée sur respectivement l'autre partie de l'élément de masse centrifuge (136 ; 236) ou de l'élément de transmission (134 ; 234).

4. Amortisseur de vibrations torsionelles selon l'une quelconque des revendications 1 à 3, **caractérisé en ce que** l'élément de masse centrifuge (236) et l'élément de transmission (234) sont réciproquement protégés via un circlip (270, 270₁, 270₂) pour la protection axiale dans la zone de liaison (238).

5. Amortisseur de vibrations torsionelles selon l'une quelconque des revendications 1 ou 2, **caractérisé en ce que** dans la zone de liaison (38), au moins un rivet (42) est intégralement formé sur une partie de l'élément de masse centrifuge (36): et de l'élément de transmission (34) en guise de dispositif d'entraînement, lequel rivet est respectivement en prise dans une ouverture de réception (44) correspondante servant de dispositif d'entraînement conjugué dans respectivement l'autre partie de l'élément de masse centrifuge (36) et de l'élément de transmission (34).

6. Amortisseur de vibrations torsionelles selon la revendication 1, **caractérisé en ce que** l'élément de masse centrifuge (336 ; 436) ainsi que l'élément de transmission (334 ; 434) sont reliés ensemble par liaison d'entraînement par friction via une surface de contact (466).

7. Amortisseur de vibrations torsionelles selon la revendication 6, **caractérisé en ce que** l'élément de positionnement (373) sur l'élément de masse centrifuge (336) est conçu en tant que gradin de positionnement s'étendant en direction circonférentielle, et **en ce que** l'élément de positionnement conjugué (372) sur l'élément de transmission (334) est conçu en tant que gradin de positionnement conjugué correspondant s'étendant en direction circonférentielle, et **en ce qu'**une partie de l'élément de masse centrifuge (336) et de l'élément de transmission (334) est frettée sur respectivement l'autre partie de l'élément de masse centrifuge (336) et de l'élément de transmission (334) dans la zone du moyen de positionnement (373) et du moyen de positionnement conjugué (372).

8. Amortisseur de vibrations torsionelles selon la revendication 6, **caractérisé en ce que** le moyen de positionnement sur l'élément de masse centrifuge (436) est formé par la zone de liaison (438), et **en ce que** le moyen de positionnement conjugué sur l'élément de transmission (434) est formé par des languettes de pallier (462), et **en ce que** l'élément de masse centrifuge (436) dans la zone radialement interne (440) dispose d'empreintes via lesquelles l'élément de masse centrifuge (436) est en engrènement par friction avec l'élément de transmission (434) via la surface de contact (466).

9. Amortisseur de vibrations torsionelles selon l'une quelconque des revendications précédentes, **caractérisé en ce que** l'élément de masse centrifuge (136 ; 436) et l'élément de transmission (134 ; 434) sont mortaisés ensemble.

10. Amortisseur de vibrations torsionelles selon la revendication 1, **caractérisé en ce que** le matériau à base de tôle est du STW 24 ou un matériau à base de tôle en aluminium.

11. Amortisseur de vibrations torsionelles selon l'une quelconque des revendications précédentes, avec un coude périphérique dans la zone radialement externe de l'élément de masse centrifuge (36), lequel s'étend essentiellement de manière orthogonale par rapport au plan de disque (E) de l'élément de masse centrifuge (36), **caractérisé en ce que** le coude périphérique (78b) est conçu à deux couches, moyennant quoi le matériau à base de tôle dans la zone radialement externe de l'élément de masse centrifuge (36b) est coudé essentiellement de manière orthogonale par rapport au plan de disque (E) de l'élément de masse centrifuge (36b), et est coudé en arrière en direction du plan de disque (E) dans une zone culminante (81b) du coude périphérique (78b), et moyennant quoi l'une au moins des ouvertures de fixation (79b) dans la zone culminante (81b) est essentiellement prévue en direction de l'axe.

12. Amortisseur de vibrations torsionelles selon la revendication 11, **caractérisé en ce que** le coude périphérique (78l) est au moins conçu avec deux couches et forme une fente de serrage entre deux couches (78l₂, 78l₃), laquelle est accessible dans le sens de l'axe pour la fixation par serrage d'un ensemble de plaques de pression (91l).

13. Amortisseur de vibrations torsionelles selon l'une quelconque des revendications précédentes, **caractérisé en ce que** dans la zone radialement externe de l'élément de masse centrifuge (36g), au moins une goupille de positionnement (88g) et/ou un rivet de fixation est prévu pour la fixation de l'ensemble de plaques de pression de l'embrayage à friction.

14. Amortisseur de vibrations torsionelles selon l'une quelconque des revendications précédentes, **caractérisé en ce que** l'élément de masse centrifuge (36h) est réalisé avec des gradins dans sa zone radialement externe.

15. Amortisseur de vibrations torsionelles selon l'une quelconque des revendications précédentes, **caractérisé en ce que** l'élément de masse centrifuge (36c ; 36d ; 36e) comprend au moins dans la zone des surfaces de friction (48c ; 48d ; 48e) au moins deux éléments de tôle (82c, 36c ; 82d, 83d ; 82e, 83e) en contact l'un avec l'autre au moins par endroits.

16. Amortisseur de vibrations torsionelles selon la revendication 15, **caractérisé en ce que** les éléments de tôle (82c, 36c ; 82d, 83d ; 82e, 83e) sont reliés ensemble via une liaison par vis, une liaison par rivet (85e) ou une liaison par colle.

17. Amortisseur de vibrations torsionelles selon la revendication 15 ou 16, **caractérisé en ce que** les éléments de tôle (82e, 83e) sont disposés à distance l'un de l'autre dans la zone des surfaces de friction (48e).

18. Amortisseur de vibrations torsionelles selon l'une quelconque des revendications 1 à 17, **caractérisé en ce que** des languettes de montage (90i) sont formées sur l'élément de masse centrifuge (36i) pour la fixation de l'ensemble de plaques de pression de l'embrayage à friction et/ou pour la fixation sur l'élément de transmission.

19. Amortisseur de vibrations torsionelles selon la revendication 18, **caractérisé en ce que** les languettes de montage (90i) s'étendent vers l'extérieur hors du plan de disque (E) de l'élément de masse centrifuge (36).
